# EUROPEAN PATENT SPECIFICATION

(11) **EP 2 887 823 B1**
(45) Date of publication and mention of the grant of the patent: **12.04.2017**
(21) Application number: 13780414.2
(22) Date of filing: 26.08.2013
(51) Int. Cl.: A23L 2/58, A23L 5/44

(54) **HUE-CONTROLLED -CAROTENE FORMULATIONS**
FARBTONKONTROLLIERTE CAROTINFORMULIERUNGEN
FORMULATION DE -CAROTENE À TEINTE RÉGULÉE

(30) Priority: 26.08.2012 US 201261693291 P
(43) Date of publication of application: 01.07.2015
(73) Proprietor: Lycored Ltd., 84102 Beer Sheva (IL)
(72) Inventor: ZACH, Ehud, 85338 Lehavim (IL); BRAGHINSKY, Bela, 84799 Beer Sheva (IL); SEDLOV, Tanya, 84496 Beer Sheva (IL); ZELKHA, Morris, 52232 Ramat-Gan (IL)
(74) Representative: Turner, Craig Robert
(86) International application number: PCT/IL2013/000066
(87) International publication number: WO 2014/033703

(56) References cited:
- JP-A- 2008 063 476
- US-A- 5 895 659
- US-B1- 6 271 396
- YUJIE LIU ET AL: "Influence of particle characteristics and E/Z-isomer ratio on the colour of concentrated [beta]-carotene dispersions", INTERNATIONAL JOURNAL OF FOOD SCIENCE AND TECHNOLOGY, vol. 45, no. 7, 21 June 2010 (2010-06-21), pages 1450-1456, XP055092472, ISSN: 0950-5423, DOI: 10.1111/j.1365-2621.2010.02290.x

## Description

### FIELD OF THE INVENTION

The present invention relates to water-dispersible formulations comprising carotenoids, in particular β-carotene, and the use of said formulations to color food and beverage products.

### BACKGROUND OF THE INVENTION

Carotenoids are well known as food coloring agents, and have hues varying between yellow and red. The hue of β-carotene, a carotenoid that is widely used as a colorant, is typically between yellow and orange.

One factor that determines the hue of a β-carotene-containing medium is the physical state of the β-carotene in its oil or aqueous carrier phase Thus, the hue of such a medium may vary greatly, depending on the physical compartmentalization of the β-carotene in the continuous phase of the medium in which it is present.

The carotenoids, as a class, have relatively low chemical stability, and this causes a two-fold problem when they are used in food processing: the difficulty to achieve a certain desired hue and the difficulty to reproduce these results.

A further major problem encountered when using carotenoids as coloring agents in the food industry is, that once a desired hue is achieved, said hue may often change when the carotenoid or food colored with carotenoids is processed, for example, by means of pasteurization.

Various strategies for dealing with these problems have been suggested in the prior art.

US 5,364,563 discloses a novel process for producing powdered carotenoid preparations, in which a suspension of a carotenoid in a high-boiling oil is brought into contact with superheated steam during a maximum period of 30 seconds, and subsequently emulsified the liquefied solution of said carotenoid in oil produced by said contact with superheated steam in an aqueous solution of a colloid and then spraying and drying said emulsion to a powder.

US 4,844,934 discloses that water-dispersible carotenoid formulations are prepared by dissolving the carotenoid in a carrier oil at elevated temperatures until saturation is achieved, rapidly emulsifying the solution with an aqueous protective colloid and then removing the water, by a process in which the protective colloid used is a mixture of an ester of a long-chain fatty acid with ascorbic acid and a starch product which is soluble in cold water. The product can be used for coloring foods and is stable to creaming

US 5,968,251 discloses that carotenoid preparations in the form of cold water-dispersible powders are produced by a) preparing a molecular-disperse solution of a carotenoid, with or without an emulsifier and/or an edible oil, in a volatile, water-miscible, organic solvent at elevated temperature and adding therein an aqueous solution of a protective colloid, whereupon the hydrophilic solvent component is transferred into the aqueous phase, and the hydrophobic phase of the carotenoid results as nanodisperse phase, b) heating the resulting hydrosol at from 40°C to 90°C, with or without cooling of the hydrosol to from 0°C to 30°C beforehand, and c) removing the solvent and the water from the heated hydrosol, and converting it into a water-dispersible dry powder.

US 5,976,575 discloses a dry powder that contains carotenoids produced by grinding a mixture of carotenoids and oil to reduce the carotenoid particle size, emulsifying the mixture with an encapsulating mixture, and drying the emulsion. The encapsulating mixture includes a starch encapsulating agent, a sugar, and an anti-oxidant. The resulting water-dispersible powder contains a high concentration of carotenoids, yet is protected from oxidation.

It is to be noted that all of the systems described in aforementioned US patents use oil as a carrier or as a solvent for the carotenoid during the manufacture process. As stated in US 5,976,575, the carotenoids are often supplied in oil dispersions rather than in crystalline form in order to stabilize them.

YUJIE LIU ET AL: "Influence of particle characteristics and E/Z-isomer ratio on the colour of concentrated [beta]-carotene dispersions",INTERNATIONAL JOURNAL OF FOOD SCIENCE AND TECHNOLOGY, vol. 45, no. 7, 21 June 2010 (2010-06-21), pages 1450-1456 studies the influence of particle characteristics on the colour of beta-carotene dispersions and concludes that the dispersions became lighter, more red and more yellow, and the colour of the dispersions became more saturated and changed from orange-red to orange-yellow as the mean particle size decreased. Solid-in-liquid beta-carotene dispersions, with mean particle sizes between 450 nm and 1500 nm are disclosed.

However, none of these prior art publications disclosing and teaching oil dispersions has provided solutions to all of the three problems discussed hereinabove, namely readily achieving a desired hue, reproducing the desired hue from batch to batch, and preserving said hue when the food or beverage product is subjected to harsh treatment regimens such as pasteurization.

In view of the above the need remains for a new process for preparing a β-carotene formulation that overcomes the above-mentioned problems.

It is the aim of the present invention to provide such a process and formulation.

A further aim of the present invention is to provide a formulation that, in addition to possessing the above-mentioned advantages, also permits the use of lower concentrations of β -carotene for any given hue than has been possible with the formulations and processes of the prior art.

### SUMMARY OF THE INVENTION

The present inventors have now unexpectedly found that a mixture of a P -carotene-containing liquid-in-liquid dispersion with a solid-in-liquid dispersion of P -carotene produced a highly stable colorant formulation. It was also found that this formulation can be added in liquid form to a foodstuff or beverage product, thereby yielding product whose color properties could be pre-determined by means of controlling the ratio of the liquid-in-liquid dispersion to the solid-in-liquid dispersion in the colorant formulation. Furthermore, when compared with prior art formulations, significantly less β -carotene was needed to achieve a product having the same color properties. Finally, this formulation (in both liquid and dry powder form) was unexpectedly found to be stable upon pasteurization without alteration in the hue or other color properties.

Thus, the present invention is primarily directed to a water-dispersible colorant formulation comprising a mixture of (a) a solid-in-liquid dispersion of β-carotene with (b) a liquid-in-liquid dispersion of β-carotene, wherein the average particle size in said solid-in-liquid dispersion is less than about 600 nm and wherein the average droplet size of the liquid-in-liquid dispersion is less than about 200 nm and wherein the solid particles in the solid-in-liquid formulation are not encapsulated in a hydrocolloid. It is to be noted that in most embodiments of the colorant formulation of the present invention, the β-carotene (or other carotenoid, such as lutein) is in an unencapsulated form. This lack of encapsulation in hydrocolloid (or other) materials has functional significance for the presently-disclosed formulation, as will be explained hereinbelow.

In one preferred embodiment of the above-disclosed formulation, the average particle size of the solid-in-liquid dispersion is less than 400 nm. In a still further preferred embodiment, the average droplet size of the liquid-in-liquid suspension is less than about 120 nm.

In another preferred embodiment, of this aspect of the invention, one or both of the solid-in-liquid dispersion and the liquid-in-liquid dispersion may contain lutein or a lutein ester in addition to β-carotene, or instead of (that is, in the absence of) β-carotene.

The β-carotene, lutein and lutein esters used in the formulations, methods and processes of the present invention may be any suitable crystalline form thereof and may either obtained from a natural source or may be produced synthetically.

In one preferred embodiment, the colorant formulation is in a liquid form. In another preferred embodiment, the colorant formulation is in a dry powder form.

In one preferred embodiment of the colorant formulation, the solid in liquid dispersion comprises carotenoid crystals in an aqueous medium, and wherein said aqueous medium may optionally further comprise one or more surfactants.

In a preferred embodiment of the colorant formulation, the liquid in liquid dispersion comprises a carotenoid mixed in an oil, dispersed in an aqueous solution comprising one or more of a sugar ester, a saponin, a fatty polyglycerol ester and a polyol.

In another aspect, the present invention provides a process for preparing a colorant formulation, wherein the hue of said formulation may be controlled, comprising the steps of:
a) preparing a carotenoid solid-in-liquid dispersion in a fluid medium, wherein said dispersion has an average particle size of less than 600 nm, and wherein the carotenoid particles are not encapsulated in a hydrocolloidal (or other) material;
b) preparing a carotenoid liquid-in-liquid dispersion in an immiscible liquid medium, wherein said dispersion has an average droplet size of less than 200 nm;
c) mixing said solid-in-liquid dispersion with said liquid-in-liquid dispersion;
wherein the hue of said solid-in-liquid dispersion is different from the hue of said liquid-in-liquid dispersion;
wherein the hue of said formulation is controlled by means of altering the ratio of the solid-in-liquid dispersion to the liquid-in-liquid dispersion in the mixture obtained in step (c), in order to obtain the desired hue;
and wherein said carotenoid is β-carotene, lutein or a mixture thereof.

According to a further aspect, the present invention provides a water-dispersible β-carotene formulation prepared according to said process.

In another aspect, the present invention is directed to the use of the water-dispersible β-carotene formulation according to the present invention, as a colorant. In one preferred embodiment of this aspect, the β-carotene formulation obtained from the above-disclosed process may be used in a liquid form. In another preferred embodiment, the water may be removed from the liquid formulation, thereby yielding a dry powder form of said formulation. Preferably, the formulation of the present invention is used to color food products and/or beverages. In other embodiments, however, the formulation may also be used to color other products, including pharmaceutical formulations such as capsules and tablets.

In another aspect, the present invention also provides a kit for use in preparing a water-dispersible β-carotene formulation of a desired hue comprising:
a) a container of a β-carotene liquid-in-liquid dispersion, said dispersion having an average droplet size below 200 nm;
b) a container of a β-carotene solid-in-liquid dispersion of solid in liquid, said dispersion having an average particle size below 600 nm, wherein the β-carotene is not encapsulated in a hydrocolloid material.
c) instructions for combining the contents of the two containers in order to obtain a formulation of the desired hue.

In a still further aspect, the present invention is also directed to a food or beverage product comprising a water-dispersible β-carotene formulation of the present invention.

It is to be noted that the same colorant effect, having the same advantages as set out above and described in more detail hereinbelow (with regard to the mixture of two dispersions), may also be obtained if the two different dispersions (i.e. the liquid-in-liquid dispersion and the solid-in-liquid dispersion) are added separately to the food or beverage to be colored. Consequently, the present invention also provides a method for coloring a food or beverage product, where the hue of said product may be controlled, wherein said method comprises the steps of:
a) providing a β-carotene solid-in-liquid dispersion in a liquid medium, wherein said dispersion has an average particle size of less than 600 nm, and wherein the β-carotene is in a non-encapsulated form;
b) providing a β-carotene liquid-in-liquid dispersion in a liquid medium, wherein said dispersion has an average droplet size of less than 200 nm;
c) adding the two dispersions defined in steps (a) and (b) to the food or beverage product to be colored;
wherein the addition of the dispersions in step (c) may be accomplished either by mixing each dispersion together prior to said addition, or, alternatively, by adding each dispersion separately to said food or beverage product;
and wherein the hue of said formulation is controlled by means of altering the ratio of the solid-in-liquid dispersion to the liquid-in-liquid dispersion that is added to the food or beverage product in step (c), in order to obtain the desired hue.

### DETAILED DESCRIPTION OF PREFERRED EMBODIMENTS

The present invention provides novel water-dispersible β-carotene formulations which, as explained hereinabove, have several advantages in relation to prior art formulations. In particular, the use of two separate dispersions in the preparation of the formulation permits the accurate control of the color and hue properties of both said formulation and of the final food or beverage product to which it is added. Furthermore, the use of a liquid formulation of the present invention in order to prepare a colored food or beverage product permits the use of significantly lower levels of β-carotene to achieve the desired hue, than are required to attain that hue when using formulations and methodologies of the prior art. In this regard, it has been surprisingly found that the hue and the strength of liquid formulations of the present invention are generally higher by 30-300% when compared with the same amount of a conventional prior formulation, such as the cold water soluble (CWS) β-carotene formulation produced by DSM. Finally, the color properties (e.g. hue and color strength) of the formulation of the present invention - whether used as a liquid or as a dry preparation - are stable when the products to which said formulation has been added are subjected to pasteurization and/or homogenization. Taken either separately or together, the aforementioned properties of the present invention are of great benefit to the food and beverage industry, since they permit the preparation of products with accurately-defined and stable color properties, at a potentially lower financial cost, in view of the reduced amount of carotenoid needed to achieve the desired hue.

According to one embodiment the use of the water-dispersible carotenoid formulation of the present invention is as an edible colorant for use in food products and in beverages.

According to another embodiment the water-dispersible β**-**Carotene of the present invention may be used as a pharmaceutically acceptable colorant in the manufacture of medicinal products.

As explained hereinabove, the β-carotene-containing colorant formulation of the present invention is prepared by combining two different components: (1) a β-carotene containing liquid-in-liquid dispersion, and (2) a β-carotene-containing solid-in-liquid dispersion.

The liquid in liquid dispersion of the present invention may be prepared as follows: β-carotene is mixed in an oil such as a medium chain triglyceride (MCT) oil, sunflower oil, or any other vegetable oil and/or with enzyme-modified lecithin, lysolecithin from Soy, Sunflower or Rapeseed oils with mixed tocopherols or tocopheryl acetate (TA) or D-L-tocopherol. The mixture obtained is then heated to a temperature in the range of about 140°C to 155°C, preferably about 150°C to obtain a solution of β-carotene in oil. Said oil solution is added to an aqueous solution containing a sugar ester, and/or saponins, and/or polyglycerol esters of fatty acids and gum Arabic, gum Senegal and structurally-similar hydrocolloids and sucrose or glucose or maltitose and glycerol and/or other polyols, which is at a temperature in the range of 80°C to 100°C, preferably about 90°C. The combined homogenous mixture and aqueous solution are homogenized to obtain a stable carotenoid-containing liquid in liquid dispersion. The average droplet size of this dispersion was below 200 nm.

The solid in liquid dispersion of the present invention may be prepared as follows: β-carotene crystals were micronized to below 1 micron, preferred 200-400 nm in a glycerol-water medium together with one or more surfactants. The surfactant(s) used may be of any suitable type, including, but not limited to, different types of sucrose esters, polyglycerol esters of fatty acids and de-oiled lecithins from, for example, soy, sunflower, canola or rapeseed.

It was found by the present inventors that the encapsulation of the carotenoid particles (in the solid-in-liquid dispersion) by hydrocolloids such as starches, milk protein, vegetable and legume proteins, polypeptides and the like, leads to a reduced color intensity in the final colorant formulation. For example, the encapsulation of β-carotene by modified starch and subsequent drying was found to substantially reduce color intensity:
Formulation prepared with non-encapsulated β-carotene:
   L=66.5; a=25.1; b=37.5;
Formulation prepared with solid-in-liquid phase containing β-carotene encapsulated in modified starch:
   L=60.2; a=20.4; b=30.6.

As will be seen from the above results, encapsulation led to a decrease in the 'a' and 'b' color parameters. Without wishing to be bound by theory, it is believe that this disadvantageous change is due to a reduction in transparency of the solid particles, i.e. masking by the hydrocolloid capsule.

In view of the foregoing, it may be seen that the lack of hydrocolloid encapsulation of the solid particles in the solid-in-liquid formulation is a very important feature of the present invention

Another key feature of the present invention is the very small particle and droplet sizes of the solid-in-liquid and liquid-in-solid dispersions, respectively. This reduction in particle and droplet size (with respect to prior art formulations) leads to a greatly increased color intensity, thereby permitting a large saving in the amount of β-carotene used (in the order of 30-300 %). In part, the very small droplet size achieved in the present invention is a consequence of the surfactants used in the preparation of the formulation.

In many preferred embodiments of the invention, the oil phase of the liquid-in-liquid formulation is present at a concentration of more than 30% (w/w) of said formulation.

While the means for modifying the hue of water-dispersible carotenoid formulations according to the prior art, are by chemical processes such as modifying the isomer ratio, the present invention provides means for modifying the hue by simply changing the ratio of the liquid in liquid dispersion to the solid in liquid dispersion in the mixture. Furthermore, the present invention provides a process for obtaining water-dispersible β-carotene formulations of a certain particle size mixed with liquid in liquid dispersion of Lutein or Lutein ester at the recommended particle size using various ratios to provide the required hues.

Thus, the methods, processes, compositions and uses thereof described herein with reference to β-carotene also apply to mixtures of said β-carotene with lutein and/or a lutein ester, and also to lutein and/or lutein ester alone (i.e. in place of the β-carotene), which are therefore within the scope of the present invention. Thus a liquid in liquid dispersion of one carotenoid (e.g. β -carotene) may be mixed with a solid in liquid dispersion of a second carotenoid (e.g. lutein), followed by water removal, to obtain a water-dispersible carotenoid formulation. The hue of such a liquid formulation, as a powder may be controlled by the ratio between the liquid-in-liquid dispersion to the solid-in-liquid dispersion..

It should be understood that during processing such as pasteurization the color strength of conventional powder formulations (such as DSM 10% of β-carotene such as CWS and CWD) decreases, This does not happen in the case of the liquid dispersion of liquid in liquid and dispersion of solid in liquid combination formulations prepared according to this invention. Thus a large saving in the amount of β-carotene used (30-300 %.) may be achieved with use of the formulation of the present invention.

### EXAMPLES

Equipment for color test:
- *ColorQuest XE , HunterLab, USA*
- 1 cm cuvette for transmission and 5 cm for reflectance ports
- Illuminant D65
- Tested parameters: L*a*b*color scale and L*c*h* color scale. The L* is lightness. The maximum for L* is 100, which represents a perfect reflecting diffuser. The minimum value for L* is zero, which represents black. The a* and b* axes have not specific numerical limits. Positive a* is red, negative-green. Positive b* is yellow, negative - blue. The C* value, choma, and the h value, hue angle, are calculated from the a* and b* of the L*a*b* color scale. The total color difference, ΔE* is a single value which takes into account the differences between the L*a*b* of the sample and standard.
- C*=√a*²+b*²; h*=arctan b*/a*;
- For color analysis and color stability are using ΔL*, ΔC*, ΔE* and ΔH*. They are the differences between the sample and standard in L*, C*, E* and h*.

UV Visible Spectrophotometer (thermosscintific, Evolution 2001)
- 1 ml of the said diluted colored beverages were measured in 1 cm cuvette against a reference of the same dilution of non colored of the same said beverage to get 0.6-0.8 absorbance unit
- Measure the maximum absorbance
- Calculate E1 = (Maximum Absorbance * dilution rates) / % color concentration in beverage

### Example 1

### SOLID-IN-LIQUID DISPERSION:

1 kg of crystalline β-carotene, 1 kg of decaglycerol monooleate, 2 kg sugar ester type PS750 100 g of vitamin C and 20 kg water were mixed thoroughly to give a homogeneous mixture following grinding in a ball-mill . The particle size of ground β-carotene was 0.3-0.6 µm.
Color parameters were tested for water solution 10 mg of b-carotene in 1 liter
L*= 56.9 a*= 38.2 b*= 28.5

### LIQUID-IN-LIQUID DISPERSION:

1 kg of crystalline β-carotene, 1 kg of medium chain triglyceride (MCT) oil, 1kg of decaglycerol monooleate and 0.7 kg of D-alpha-tocopherol were heated with constant stirring to 150°C, until a transparent solution was obtained.
2 kg sugar ester and 3 kg of gum Arabic were dissolved in 15 kg of hot water (70-80°C).

The β-carotene transparent solution was added without cooling to the sugar ester - gum Arabic solution with vigorous mixing and the resulting mixture was immediately homogenized in a High Pressure Homogenizer. Average droplet size was below 500 nm.
Color parameters were tested for water solution 10 mg of b-carotene in 1 liter
L*= 72.3 a*= 10.7 b*= 38.5

### Example 2

### SOLID-IN-LIOUID DISPERSION:

1 kg of crystalline β-carotene , 1.5 kg of de-oiled soy lecithin, 2 kg sugar ester , 100 g of vitamin C and 20 kg water mixed thoroughly to give a homogeneous mixture following grinding in a ball-mill. The particle size of the ground β-carotene was 0.2-0.6 µm.
Color parameters were tested for water solution 10 mg of b-carotene in 1 liter
L*= 43.2 a*= 40.4 b*= 33.5

LIQUID-IN-LIQUID DISPERSION:1 kg of crystalline β-carotene, 2.4 kg of MCT oil ,1.4 kg of enzyme-modified lecithin and 0.3 kg of tocopherol mix were heated while constantly stirring to 150°C until a transparent solution was obtained.

0.6 kg sugar ester were dissolved in 6 kg of hot water (70-80°C), add 10 kg sucrose and 7 kg glycerol.

β-carotene transparent solution was added without cooling to the water phase while using high shear mixer and the resulting solution was immediately homogenized in High Pressure Homogenizer. Average droplet size was below 200 nm.

Color parameters were tested for water solution 10 mg of b-carotene in 1 liter
L*= 83.5 a*= 4.5 b*=45.8

### Example 3

### SOLID-IN-LIQUID DISPERSION:

1 kg of crystalline β-carotene, 1.5 kg of de-oiled sunflower lecithin, 2 kg sugar ester , 100 g of vitamin C and 20 kg water mixed thoroughly to give a homogeneous mixture following grinding in a ball-mill. The particle size of the ground β-carotene was 0.2-0.6 µm. Color parameters were tested for water solution 10 mg of b-carotene in 1 liter
L*= 45.5 a*= 41.2 b*= 37.5

### LIQUID-IN-LIQUID DISPERSION:

1 kg of crystalline β-carotene, 2.1 kg of MCT oil, 1 kg of enzyme-modified lecithin and 0.3 kg of tocopherol mix were heated while constantly stirring to 150°C until a transparent solution was obtained.

1 kg Q-Naturele 200 (saponin extract) was mixed in 4 kg of hot water (70-80°C), and 4 kg sucrose and 5 kg glycerol were added.

β-carotene transparent solution was added without cooling to the water phase while using a high shear mixer and the resulting solution was immediately homogenized in a High Pressure Homogenizer. The average droplet size was below 200 nm.

Color parameters were tested for water solution 10 mg of b-carotene in 1 liter
L*= 82.5 a*= 11.5 b*=51.2

### Example 4

### SOLID-IN-LIOUID DISPERSION:

1 kg of crystalline β-carotene, 1.5 kg of de-oiled sunflower lecithin, 2 kg sugar ester , 100 g of vitamin C and 20 kg water were mixed thoroughly to give a homogeneous mixture following grinding in a ball-mill. The particle size of the ground β-carotene was 0.2-0.6 µm.

The color parameters were tested in a solution of 10 mg of b-carotene in 1 liter of water.
L*= 45.5 a*= 41.2 b*= 37.5

### LIQUID-IN-LIQUID DISPERSION:

1 kg of marigold oleoresin, 1 kg of MCT oil and 0.3 kg of tocopherol mix were heated with constant stirring to 150°C until a transparent solution was obtained.

1.1 kg Q-Naturele 200 (saponin extract) was mixed in 4.5 kg of hot water (70-80°C); add 4.5 kg sucrose and 5 kg glycerol.

β-carotene transparent solution was added without cooling to the water phase using a high shear mixer and the resulting solution was immediately homogenized in a High Pressure Homogenizer. The average droplet size was below 200 nm.

Color parameters were tested for a solution of 10 mg of beta-carotene in 1 liter in water.
L*= 58.8 a*= 8.6 b*=50.8

### Application Examples

5% orange juice beverage was chosen as a model:
a) A compound that consists of orange juice concentrate, sugar syrup, orange flavor oil and the following β-carotene formulation was prepared.
   a.1) β-carotene formulations:
      a.1.1) Conventional powder form β-Carotene Cold Water Soluble (CWS) prepared with starch as a stabilizer (such as the cold water soluble (CWS) 10% β-carotene formulation produced by DSM) was used to color the finished beverage with, 3, 5 and 10ppm β-Carotene.
      a.1.2) liquid form of a mix of β-Carotene dispersion of liquid in liquid and β-carotene dispersion of solid in liquid in chosen combination (1-99%) was used to color the finished beverage with 2, 3, 5 and 10ppm β-Carotene.
b) The colored compound was homogenized in a two stage pressure homogenizer: first stage at 200bars and second stage at 50 bars.
c) Bottling syrup was prepared, using the homogenized colored compound, sugar syrup, organic acid, ascorbic acid (200ppm in finished product) and pectin added as a stabilizer.
d) The bottling syrup was diluted with water to provide the desired finished beverage.
e) The beverage was pasteurized to 85°C in a hot bath.
f) 500ml PET bottles were quickly filled and sealed.
g) The sealed bottles were immediately cooled in an ice bath to less than 25°C.
h) The bottles were stored in a day light cabinet
   i) A series of the following analyses were conducted
   I1) L.a.b scale by colorimeter (Hunter Lab)
   I2) color Hue value by colorimeter (Hunter Lab)
   I3) color strength value by colorimeter (Hunter Lab)
   I4) color strength value by spectrophotometer (E 1:1 method)

### Application Example 1:

Mixing a liquid-in-liquid dispersion with a solid-in-liquid dispersion (both from Example 1) at a ratio of 60:40 yielded a formulation that gave the same hue at 10 ppm compared to 10 ppm β-carotene from 10% CWS (obtained from DSM). Following pasteurization of the beverage the hue of the DSM powder changed significantly, while the mixture of the liquid-in-liquid dispersion and the solid-in-liquid dispersion maintained a stable hue.

### Application Example 2:

A liquid form of a mix of a β-Carotene liquid-in-liquid dispersion with a β-carotene solid-in-liquid dispersion (of Example 2) at a ratio of 60:40 was used to color the finished beverage with 3, 5 and 10ppm β-carotene.

Unpasteurized vs. pasteurized orange juice colored with β-carotene:

| **β Carotene content in beverage** | **formulations** | **Not pasteurized** | **Pasteurized** | **Not pasteurized** | **Pasteurized** | **Not pasteurized** | **Pasteurized** |
|---|---|---|---|---|---|---|---|
| | | L | | A | | b | |
| 3ppm | **Powder DSM 10% CWS/S** | 79.40 | 84.85 | 12.05 | 6.85 | 28.56 | 33.43 |
| | **Mixed Liquid dispersions** | 82.21 | 84.07 | 7.76 | 5.99 | 29.43 | 30.21 |
| 5ppm | **Powder DSM 10% CWS/S** | 72.3 | 80.01 | 19.38 | 11.38 | 32.42 | 40.17 |
| | **Mixed Liquid dispersions** | 75.05 | 76.52 | 14.86 | 13.74 | 32.51 | 33.52 |
| 10ppm | **Powder DSM 10% CWS/S** | 59.12 | 70.12 | 31.83 | 21.25 | 33.02 | 42.54 |
| | **Mixed Liquid dispersions** | 66.20 | 66.51 | 24.73 | 23.08 | 37.3 | 37.59 |

1. The results indicate that the intensity of the color (L value) of the CWS formulation decreased significantly at all levels (L value increased) following pasteurization while the color intensity of the Liquid dispersion mixture did not change significantly.
2. The results indicate that the red tone ('a' value) of CWS formulation decreased significantly at all levels ('a' values decreased) following pasteurization while the red tone of the liquid dispersion mixture did not change significantly.
3. The result indicate that the yellow tone ('b' value) of the CWS formulation increased significantly at all levels ('b' values increased) following pasteurization while the yellow tone of the liquid mixture did not change significantly.

L.a.b, and Hue value and E1:1 measurements of pasteurized orange juice beverage colored with 5 and 10 ppm of β-carotene from powder DSM 10% CWS/S Vs. liquid form of a 50:50 mixture of a liquid-in-liquid dispersion and a solid-in-liquid dispersion:

| **5% orange juice colored with:** | **ppm β-Carotene** | **L** | **a** | **b** | **Hue** | **E 1:1** |
|---|---|---|---|---|---|---|
| DSM 10% CWS/S (synthetic) | 5 | 82.94 | 8.46 | 37.31 | 77.22 | 920 |
| Natural liquid dispersions mixture | | 78.48 | 9.99 | 32.75 | 73.04 | 1272 |
| Synthetic liquid dispersions mixture | | 75.45 | 13.41 | 34.25 | 68.62 | 1588 |
| | | | | | | |
| DSM 10% CWS/S (synthetic) | 10 | 74 | 17.25 | 41.72 | 67.54 | 872 |
| Natural liquid dispersions mixture | | 64.22 | 22.05 | 35.23 | 57.96 | 1452 |
| Synthetic liquid dispersions mixture | | 63.95 | 25.66 | 34.57 | 53.41 | 1809 |

1. The results indicate that the Hue value of 5% orange juice colored with 5ppm β-carotene using liquid-in-liquid dispersion and solid-in-liquid dispersion mixture (natural and synthetic) is close to the Hue of juice colored with 10ppm β-carotene from DSM 10% CWS/S (synthetic).
2. The results indicate that the E1:1 value of orange juice colored with 5ppm β-carotene prepared from a liquid-in-liquid and solid-in-liquid dispersion mixture (natural and synthetic) is 38-72% higher than the E1:1 value of 5% orange juice colored with the same amount of β-carotene from DSM 10% CWS/S (synthetic)
3. The results indicate that the E1:1 value of orange juice colored with 10ppm β-carotene prepared from a liquid-in-liquid dispersion and solid-in-liquid dispersion mixture (natural and synthetic) is 66-107% higher than the E1:1 value of 5% orange juice colored with the same amount of β-carotene from DSM 10% CWS/S (synthetic)
4. These result indicate that the hue and strength of 5% juice colored with β-carotene from a liquid form of a mixture of a liquid-in-liquid dispersion and a solid-in-liquid dispersion is significantly higher than the hue and strength of 5% juice colored with β-carotene from DSM 10% CWS/S.
5. These results confirm the organoleptic observation of the hue and strength of 5% orange juice colored with a liquid-in-liquid dispersion and solid-in-liquid dispersion mixture compared with the same juice colored with DSM 10% CWS/S.
6. The results indicate that at least a 30% cost saving of β-carotene can be achieved by the use of a liquid β-carotene liquid-in-liquid dispersion and solid-in-liquid dispersion formulation mixture, compared to the use of DSM 10% CWS/S.
7. The results indicate that the synthetic and the natural formulation of liquid β- carotene liquid-in-liquid dispersion and solid-in-liquid dispersion formulation mixture behave the same.

### Example - powder preparation

### Cold water dispersible powder

300 g a solid-in-liquid dispersion and 700 g of a liquid-in-liquid dispersion were mixed and 100 g of modified starch was added while stirring vigorously. The mixture was then immediately spray dried to obtain a cold water soluble stable powder. The spray drying operation was conducted in a conventional spray dryer.

## Claims

1. A water-dispersible colorant formulation comprising a mixture of (a) a solid-in- liquid dispersion of one or more carotenoids with (b) a liquid-in-liquid dispersion of one or more carotenoids, wherein the average particle size in said solid-in-liquid dispersion is less than about 600 nm, wherein the average droplet size of the liquid-in- liquid dispersion is less than about 200 nm, wherein the carotenoids are selected from the group consisting of β-carotene and lutein and wherein the solid particles in the solid-in-liquid formulation are not encapsulated in a hydrocolloid.

2. The water dispersible colorant formulation according to claim 1, wherein the carotenoids in the solid-in-liquid dispersion are unencapsulated.

3. The water-dispersible colorant formulation according to claim 1, wherein the solid in liquid dispersion comprises carotenoid crystals in an aqueous medium, and wherein said aqueous medium may optionally further comprise one or more surfactants.

4. The water-dispersible colorant formulation according to claim 1, wherein the liquid in liquid dispersion comprises a carotenoid mixed in an oil, dispersed in an aqueous solution comprising one or more of a sugar ester, a saponin, a fatty polyglycerol ester, a hydrocolloid and a polyol.

5. The water-dispersible colorant formulation according to claim 1, wherein the carotenoid is β-carotene.

6. The water-dispersible colorant formulation according to claim 1, wherein the carotenoid is lutein.

7. The water-dispersible colorant formulation according to claim 1, wherein the carotenoids comprise β-carotene and lutein.

8. The formulation according to claim 1 wherein said formulation is in liquid form.

9. The formulation according to claim 1, wherein said formulation is in a dry powder form.

10. A process for preparing a colorant formulation, wherein the hue of said formulation may be controlled, comprising the steps of:
a) preparing a carotenoid solid-in-liquid dispersion in a liquid medium, wherein said dispersion has an average particle size of less than 600 nm, and wherein the solid carotenoid particles are not encapsulated in hydrocolloids;
b) preparing a carotenoid liquid-in-liquid dispersion in a liquid medium, wherein said dispersion has an average droplet size of less than 200 nm;
c) mixing said solid-in-liquid dispersion with said liquid-in-liquid dispersion; wherein the hue of said formulation is controlled by means of altering the ratio of the solid-in-liquid dispersion to the liquid-in-liquid dispersion in the mixture obtained in step (c), in order to obtain the desired hue, and wherein said carotenoid is β-carotene, lutein or a mixture thereof.

11. The process according to claim 10, wherein the carotenoid is β-carotene.

12. A dispersible β-carotene formulation according to claim 1 for use in coloring food or beverage products.

13. A kit for use in preparing a water-dispersible β-carotene formulation of a desired hue comprising:
a) a container of a β-carotene liquid-in-liquid dispersion, said dispersion having an average droplet size below 200 nm;
b) a container of a β-carotene solid-in-liquid dispersion of solid in liquid, said dispersion having an average particle size below 600 nm, wherein the β-carotene is not encapsulated in a hydrocolloid; and
c) instructions for combining the contents of said two containers in order to obtain a formulation of the desired hue.

14. A food or beverage product comprising a water-dispersible β-carotene formulation according to claim 1.

15. A method for coloring a food or beverage product, wherein the hue of said product may be controlled, wherein said method comprises the steps of:
a) providing a β-carotene solid-in-liquid dispersion in a liquid medium, wherein said dispersion has an average particle size of less than 600 nm, and wherein said β-carotene is not encapsulated in a hydrocolloid;
b) providing a β-carotene liquid-in-liquid dispersion in a liquid medium, wherein said dispersion has an average droplet size of less than 200 nm;
c) adding the two dispersions defined in steps (a) and (b) to the food or beverage product to be colored;
wherein the addition of the dispersions in step (c) may be accomplished either by mixing each dispersion together prior to said addition, or, alternatively, by adding each dispersion separately to said food or beverage product;
and wherein the hue of said formulation is controlled by means of altering the ratio of the solid-in-liquid dispersion to the liquid-in-liquid dispersion that is added to the food or beverage product in step (c), in order to obtain the desired hue.

## Patentansprüche

1. Wasserdispergierbare Farbmittelformulierung, umfassend eine Mischung aus (a) einer fest-in-flüssigen Dispersion von einem oder mehreren Carotinoiden mit (b) einer flüssig-in-flüssigen Dispersion von einem oder mehreren Carotinoiden, wobei die mittlere Teilchengröße in der fest-in-flüssigen Dispersion weniger als etwa 600 nm beträgt, wobei die mittlere Tröpfchengröße der flüssig-in-flüssigen Dispersion weniger als etwa 200 nm beträgt, wobei die Carotinoide aus der Gruppe ausgewählt sind, bestehend aus β-Carotin und Lutein und wobei die festen Teilchen in der festen in flüssigen Formulierung nicht in einem Hydrokolloid eingekapselt sind.

2. Wasserdispergierbare Farbmittelformulierung nach Anspruch 1, wobei die Carotinoide in der fest-in-flüssig-Dispersion nicht eingekapselt sind.

3. Wasserdispergierbare Farbmittelformulierung nach Anspruch 1, wobei der Feststoff in flüssiger Dispersion Carotinoidkristalle in einem wässrigen Medium umfasst und wobei das wässrige Medium gegebenenfalls noch ein oder mehrere Tenside umfassen kann.

4. Wasserdispergierbare Farbmittelformulierung nach Anspruch 1, wobei die Flüssigkeit in einer flüssigen Dispersion ein Carotinoid, gemischt in einem Öl umfasst, dispergiert in einer wässrigen Lösung, umfassend einen oder mehrere Zuckerester, ein Saponin, einen Fettpolyglycerinester, ein Hydrokolloid und ein Polyol.

5. Wasserdispergierbare Farbmittelformulierung nach Anspruch 1, wobei das Carotinoid β-Carotin ist.

6. Wasserdispergierbare Farbmittelformulierung nach Anspruch 1, wobei das Carotinoid Lutein ist.

7. Wasserdispergierbare Farbmittelformulierung nach Anspruch 1, wobei die Carotinoide ß-Carotin und Lutein umfassen.

8. Wasserdispergierbare Farbmittelformulierung nach Anspruch 1, wobei die Formulierung in flüssiger Form vorliegt.

9. Wasserdispergierbare Farbmittelformulierung nach Anspruch 1, wobei die Formulierung in einer trockenen Pulverform vorliegt.

10. Verfahren zur Herstellung einer Farbmittelformulierung, wobei der Farbton der Formulierung kontrolliert werden kann, umfassend die Schritte:
a) Herstellen einer Carotinoid-Feststoff-in-Flüssigkeit-Dispersion in einem flüssigen Medium, wobei die Dispersion eine mittlere Teilchengröße von weniger als 600 nm aufweist und wobei die festen Carotinoidteilchen nicht in Hydrokolloiden eingekapselt sind;
b) Herstellen einer Carotinoid-flüssig-in-flüssig-Dispersion in einem flüssigen Medium, wobei die Dispersion eine mittlere Tröpfchengröße von weniger als 200 nm aufweist;
c) Mischen der fest-in-flüssigen Dispersion mit der flüssig-in-flüssigen Dispersion; wobei der Farbton der Formulierung durch Verändern des Verhältnisses der fest-in-flüssig Dispersion zu der flüssig-in-flüssig Dispersion in dem in Schritt (c) erhaltenen Gemisch gesteuert wird, um den gewünschten Farbton zu erhalten, und wobei das Carotinoid β-Carotin, Lutein oder ein Gemisch davon ist.

11. Verfahren nach Anspruch 10, wobei das Carotinoid β-Carotin ist.

12. Dispergierbare β-Carotin-Formulierung nach Anspruch 1 zur Verwendung bei der Färbung von Nahrungsmittel- oder Getränkeprodukten.

13. Kit zur Verwendung bei der Herstellung einer wasserdispergierbaren β-Carotin-Formulierung mit einem gewünschten Farbton, umfassend:
a) einen Behälter mit einer β-Carotin-flüssig-in-flüssig Dispersion, wobei die Dispersion eine mittlere Tröpfchengröße unter 200 nm aufweist;
b) einen Behälter mit einer β-Carotin-fest-in-flüssig Dispersion von Feststoff in Flüssigkeit, wobei die Dispersion eine mittlere Teilchengröße unter 600 nm aufweist, wobei das β-Carotin nicht in einem Hydrokolloid eingekapselt ist; und
c) Anweisungen zum Kombinieren des Inhalts der beiden Behälter, um eine Formulierung des gewünschten Farbtons zu erhalten.

14. Nahrungsmittel oder Getränkeprodukt, umfassend eine in Wasser dispergierbare β-Carotin-Formulierung nach Anspruch 1.

15. Verfahren zum Färben eines Nahrungsmittel- oder Getränkeprodukts, wobei der Farbton des Produkts geregelt werden kann, wobei das Verfahren die folgenden Schritte umfasst:
a) das Bereitstellen einer ß-Carotin-fest-in-flüssig Dispersion in einem flüssigen Medium, wobei die Dispersion eine mittlere Teilchengröße von weniger als 600 nm aufweist und wobei das ß-Carotin nicht in einem Hydrokolloid eingekapselt ist;
b) das Bereitstellen einer ß-Carotin-flüssig-in-flüssig Dispersion in einem flüssigen Medium, wobei die Dispersion eine mittlere Tröpfchengröße von weniger als 200 nm aufweist;
c) das Zugeben der beiden in den Schritten (a) und (b) definierten Dispersionen zum zu färbenden Lebensmittel- oder Getränkeprodukt;
wobei die Zugabe der Dispersionen in Schritt (c) entweder durch Mischen jeder Dispersion zusammen vor der Zugabe, oder alternativ durch Zugabe jeder Dispersion getrennt zu dem Nahrungsmittel- oder Getränkeprodukt erfolgt;
und wobei der Farbton der Formulierung durch Verändern des Verhältnisses der fest-in-flüssigen Dispersion zur flüssig-in-flüssigen Dispersion gesteuert wird, die dem Nahrungsmittel oder Getränkeprodukt in Schritt (c) zugesetzt wird, um den gewünschten Farbton zu erhalten.

## Revendications

1. Formulation de colorant dispersible dans l'eau comprenant un mélange (a) d'une dispersion solide dans liquide d'un ou de plusieurs caroténoïdes avec (b) une dispersion liquide dans liquide d'un ou de plusieurs caroténoïdes, dans laquelle la taille moyenne des particules dans ladite dispersion solide dans liquide est inférieure à environ 600 nm, dans laquelle la taille moyenne des gouttelettes de la dispersion liquide dans liquide est inférieure à environ 200 nm, dans laquelle les caroténoïdes sont choisis dans le groupe constitué du ß-carotène et de la lutéine et dans laquelle les particules solides dans la formulation solide dans liquide ne sont pas encapsulées dans un hydrocolloïde.

2. Formulation de colorant dispersible dans l'eau selon la revendication 1, dans laquelle les caroténoïdes dans la dispersion solide dans liquide sont non encapsulés.

3. Formulation de colorant dispersible dans l'eau selon la revendication 1, dans laquelle la dispersion solide dans liquide comprend des cristaux de caroténoïdes dans un milieu aqueux, et dans laquelle ledit milieu aqueux peut en outre éventuellement comprendre un ou plusieurs tensioactifs.

4. Formulation de colorant dispersible dans l'eau selon la revendication 1, dans laquelle la dispersion liquide dans liquide comprend un caroténoïde mélangé dans une huile, dispersé dans une solution aqueuse comprenant un ou plusieurs produits parmi un ester de sucre, une saponine, un ester de polyglycérol gras, un hydrocolloïde et un polyol.

5. Formulation de colorant dispersible dans l'eau selon la revendication 1, dans laquelle le caroténoïde est du ß-carotène.

6. Formulation de colorant dispersible dans l'eau selon la revendication 1, dans laquelle le caroténoïde est de la lutéine.

7. Formulation de colorant dispersible dans l'eau selon la revendication 1, dans laquelle les caroténoïdes comprennent du ß-carotene et de la lutéine.

8. Formulation selon la revendication 1, dans laquelle ladite formulation est sous forme liquide.

9. Formulation selon la revendication 1, dans laquelle ladite formulation est sous forme d'une poudre sèche.

10. Procédé de préparation d'une formulation de colorant, dans lequel la teinte de ladite formulation peut être contrôlée, comprenant les étapes de :
a) préparation d'une dispersion solide dans liquide d'un caroténoïde dans un milieu liquide, ladite dispersion ayant une taille moyenne des particules inférieure à 600 nm, et où les particules de caroténoïde solides ne sont pas encapsulées dans des hydrocolloïdes ;
b) préparation d'une dispersion liquide dans liquide d'un caroténoïde dans un milieu liquide, où ladite dispersion a une taille moyenne des gouttelettes inférieure à 200 nm ;
c) mélange de ladite dispersion solide dans liquide avec ladite dispersion liquide dans liquide ; où la teinte de ladite formulation est contrôlée par une modification du rapport de la dispersion solide dans liquide sur la dispersion liquide dans liquide dans le mélange obtenu dans l'étape (c), afin d'obtenir la teinte désirée, et où ledit caroténoïde est du ß-carotène, de la lutéine ou un mélange de ceux-ci.

11. Procédé selon la revendication 10, dans lequel le caroténoïde est du ß-carotène.

12. Formulation de ß-carotène dispersible selon la revendication 1 pour une utilisation dans la coloration de produits d'alimentation ou de boissons.

13. Kit destiné à être utilisé dans la préparation d'une formulation de ß-carotène dispersible dans l'eau d'une teinte désirée comprenant :
a) un récipient d'une dispersion liquide dans liquide de ß-carotène, ladite dispersion ayant une taille moyenne des gouttelettes inférieure à 200 nm ;
b) un récipient de dispersion solide dans liquide de ß-carotène de solide dans un liquide, ladite dispersion ayant une taille des particules moyenne inférieure à 600 nm, dans laquelle le ß-carotène n'est pas encapsulé dans un hydrocolloïde ; et
c) des instructions pour la combinaison des contenus desdits deux récipients afin d'obtenir une formulation de la teinte souhaitée.

14. Produit d'alimentation ou boisson comprenant une formulation de ß-carotène dispersible dans l'eau selon la revendication 1.

15. Procédé de coloration d'un produit d'alimentation ou d'une boisson, dans lequel la teinte dudit produit peut être contrôlée, où ledit procédé comprend les étapes consistant en :
a) la fourniture d'une dispersion solide dans liquide de ß-carotène dans un milieu liquide, ladite dispersion ayant une taille moyenne des particules inférieure à 600 nm, et où ledit ß-carotène n'est pas encapsulé dans un hydrocolloïde ;
b) la fourniture d'une dispersion liquide dans liquide de ß-carotène dans un milieu liquide, ladite dispersion ayant une taille moyenne des gouttelettes inférieure à 200 nm ;
c) l'ajout des deux dispersions définies dans les étapes (a) et (b) au produit d'alimentation ou à la boisson à colorer ;
où l'ajout des dispersions dans l'étape (c) peut être réalisé soit en mélangeant chaque dispersion ensemble avant ledit ajout, ou dans une variante, en ajoutant chaque dispersion séparément audit produit d'alimentation ou boisson ;
et où la teinte de ladite formulation est contrôlée par la modification du rapport de la dispersion solide dans liquide sur la dispersion liquide dans liquide qui est ajoutée au produit d'alimentation ou boisson à l'étape (c), afin d'obtenir la teinte souhaitée.
